# EUROPÄISCHE PATENTSCHRIFT

(11) **EP 1 248 202 B1**
(45) Veröffentlichungstag und Bekanntmachung des Hinweises auf die Patenterteilung: **01.05.2013**
(21) Anmeldenummer: 02006848.2
(22) Anmeldetag: 26.03.2002
(51) Int. Cl.: G06F 13/364

(54) **Bussystem**
Bus system
Système de bus

(30) Priorität: 04.04.2001 DE 10116795
(43) Veröffentlichungstag der Anmeldung: 09.10.2002
(73) Patentinhaber: Infineon Technologies AG, 85579 Neubiberg (DE)
(72) Erfinder: Barrenscheen, Jens, Dr., 81669 München (DE); Herz, Karl, 81735 München (DE); Vowe, Achim, Dr., 80469 München (DE)
(74) Vertreter: Repkow, Ines

(56) Entgegenhaltungen:
- US-A- 5 241 632
- US-A- 5 274 774
- US-A- 5 377 332
- US-A- 5 996 037

## Beschreibung

Die vorliegende Erfindung betrifft eine Vorrichtung gemäß dem Oberbegriff des Patentanspruchs 1.

Bussysteme sind seit vielen Jahren in unzähligen Ausführungsformen bekannt.

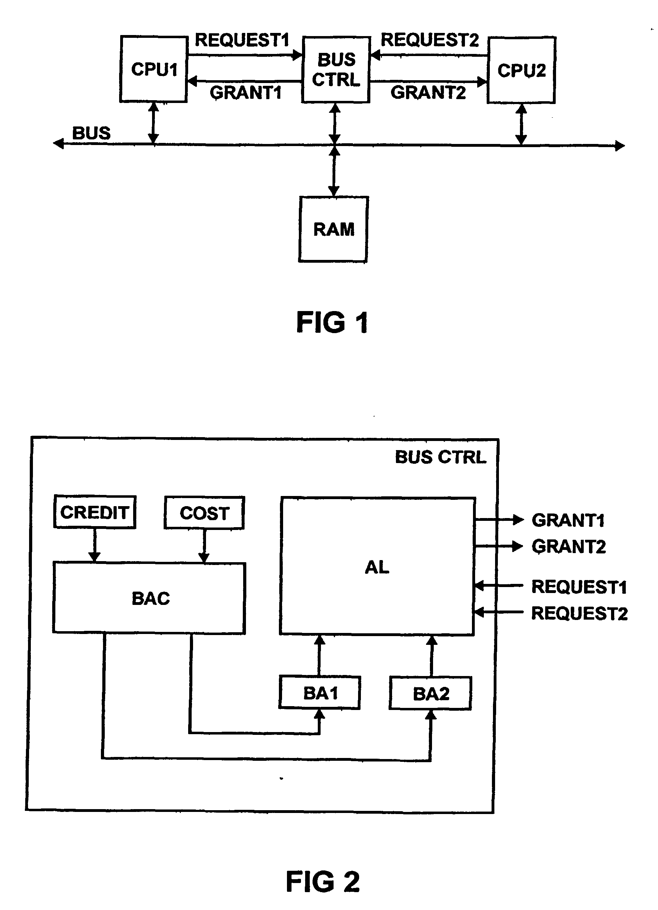

Der prinzipielle Aufbau eines Bussystems ist in Figur 1 veranschaulicht. Das in der Figur 1 gezeigte System umfaßt
- einen mit dem Bezugszeichen BUS bezeichneten Bus,
- an den Bus BUS angeschlossene und über diesen miteinander verbindbare Einheiten CPU1, CPU2, und RAM, und
- einen die Busvergabe steuernden Bus-Controller BUS CTRL.

Im betrachteten Beispiel
- ist der Bus BUS der interne Bus eines Mikrocontrollers,
- sind die Einheiten CPU1 und CPU2 verschiedene Cores des Mikrocontrollers, und
- ist die Einheit RAM ein Speicher, auf welchen sowohl der erste Core CPU1, als auch der zweite Core CPU2 zugreifen kann.

Von den genannten Einheiten CPU1, CPU2 und RAM sind
- die Einheiten CPU1 und CPU2 Master-Einheiten (Einheiten, die den Bus anfordern und daraufhin Bus-Master werden können), und
- die Einheit RAM eine Slave-Einheit (eine Einheit, die ausschließlich Bus-Slave sein kann).

Der Bus-Controller BUS CTRL legt fest, welche der vorhandenen Master-Einheiten CPU1 und CPU2 wann und wie lange Bus-Master sein kann. Die Master-Einheiten CPU1 und CPU2 sind hierzu jeweils über Leitungen REQUEST und GRANT mit dem Bus-Controller BUS CTRL verbunden. Wenn eine Master-Einheit den Bus BUS benötigt, um Daten zu einer anderen der am Bus angeschlossenen Einheiten auszugeben, oder Daten von einer anderen Einheit anzufordern, signalisiert sie dies dem Bus-Controller BUS CTRL durch die Ausgabe eines entsprechenden Signals über die Leitung REQUEST. Der Bus-Controller überprüft daraufhin, ob der Bus frei ist, und teilt der den Bus anfordernden Einheit über die Leitung GRANT mit, daß diese den Bus benutzen kann (wenn der Bus frei ist) bzw. daß diese den Bus derzeit nicht benutzen kann (wenn gerade eine andere Einheit Bus-Master ist).

Ein bekanntes Problem derartiger Bussysteme besteht darin, daß Einheiten, die Daten auszugeben haben oder dringend Daten von einer anderen Einheit benötigen, mitunter sehr lange warten müssen, bis sie den Bus BUS zugeteilt bekommen.

Weitere Bussysteme sind aus der der US 5 241 632 A, der US 5 377 332 A, der US 5 996 037 A, und der US 5 274 774 A bekannt, wobei in den beiden erstgenannten Dokumenten Bussysteme gemäß dem Oberbegriff des Patentanspruchs 1 beschrieben sind. Den genannten Dokumenten ist jedoch keine voll zufriedenstellende Lösung des vorstehend angesprochenen Problems entnehmbar.

Der vorliegenden Erfindung liegt daher die Aufgabe zugrunde, das Bussystem gemäß dem Oberbegriff des Patentanspruchs 1 derart weiterzubilden, daß gewährleistet werden kann, daß eine Einheit, die Daten auszugeben hat oder Daten von einer anderen Einheit benötigt, innerhalb einer gewissen maximalen Zeit einen Zugriff auf den Bus erhalten kann.

Diese Aufgabe wird erfindungsgemäß durch ein Bussystem mit den im kennzeichnenden Teil des Patentanspruchs 1 beanspruchten Merkmalen gelöst.

Durch eine entsprechende Festlegung und/oder Veränderung
- der besagten Werte, und/oder
- der Bedingung, die ein Wert erfüllen muß, damit die Einheit, welcher der betreffende Wert zugeordnet ist, den Bus zugeteilt bekommen kann,
kann festgelegt werden,
- wie oft pro Zeiteinheit jede Einheit den Bus zugeteilt bekommen kann, und/oder
- wie lange ein einzelner Buszugriff und/oder die Summe aller Buszugriffe innerhalb einer bestimmten Zeit sein darf, und/oder
- wie lange eine Einheit maximal warten muß, bis ihr der Bus zugeteilt wird.

Dadurch kann die Zuteilung des Busses an die jeweiligen Einheiten auf sehr einfache Weise und mit geringem Aufwand optimal an die jeweiligen Bedürfnisse angepaßt werden. Insbesondere kann gewährleistet werden, daß jede Einheit, die Daten auszugeben hat oder Daten von einer anderen Einheit benötigt, innerhalb einer gewissen maximalen Zeit einen Zugriff auf den Bus erhalten kann; es kann ausgeschlossen werden, daß eine oder mehrere Einheiten den Bus über längere Zeiten überhaupt nicht oder nur so selten und/oder nur in einem so geringen Umfang zugeteilt bekommen, daß die ordnungsgemäße Funktion der betreffenden Einheiten in Frage gestellt ist. Vorteilhafte Weiterbildungen der Erfindung sind der folgenden Beschreibung, den Unteransprüchen, und den Figuren entnehmbar.

Die Erfindung wird nachfolgend anhand eines Ausführungsbeispiels unter Bezugnahme auf die Figuren näher erläutert. Es zeigen
- Figur 1: ein Ausführungsbeispiel eines Bussystems der vorstehend betrachteten Art, und
- Figur 2: schematisch den Aufbau eines im nachfolgend beschriebenen Bussystem zum Einsatz kommenden Bus-Controllers.

Das im folgenden beschriebene Bussystem weist prinzipiell den selben Aufbau auf wie das in Figur 1 gezeigte und eingangs unter Bezugnahme darauf beschriebene Bussystem. Unterschiedlich sind im betrachteten Beispiel "nur" der Aufbau und die Arbeitsweise der Einheiten CPU1 und/oder CPU2 und/oder des Bus-Controllers BUS CTRL.

Es sei jedoch bereits an dieser Stelle darauf hingewiesen,
- daß die an den Bus BUS angeschlossenen Einheiten nicht die in der Figur 1 gezeigten und unter Bezugnahme darauf beschriebenen Einheiten sein müssen (bei den an den Bus BUS angeschlossenen Einheiten kann es sich prinzipiell um beliebige Einheiten handeln), und
- daß keine Notwendigkeit besteht, daß das Bussystem Bestandteil eines Mikrocontrollers ist (das Bussystem kann auch Bestandteil eines beliebigen anderen Bauteils sein oder mehrere Bauteile oder bestimmte Komponenten derselben verbinden).

Der vorliegend betrachtete Bus-Controller BUS CTRL weist die Besonderheit auf, daß in ihm besondere, im folgenden als Bus-Accounts bezeichnete Werte gespeichert sind und verwaltet werden, und daß es der Bus-Controller von den Bus-Accounts abhängig macht, ob eine einen Buszugriff anfordernde Einheit den Bus zugeteilt bekommt. Die Bus-Accounts sind den Einheiten, die einen Buszugriff anfordern können, zugeordnete Werte und zeigen an, wie lange und/oder wie häufig die betreffende Einheit den Bus zugeteilt bekommen kann oder zugeteilt bekommen hat.

Der prinzipielle Aufbau eines Ausführungsbeispiels eines solchen Bus-Controllers ist in Figur 2 gezeigt.

Der gezeigte Bus-Controller enthält
- eine Arbitrierungs-Logik AL, welche entscheidet, ob und gegebenenfalls welcher der an den Bus BUS angeschlossenen Einheiten der Bus zugeteilt wird,
- Speichereinrichtungen BA1, BA2, CREDIT, und COST, wobei
   - in der Speichereinrichtung BA1 der der Einheit CPU1 zugeordnete Bus-Account gespeichert ist,
   - in der Speichereinrichtung BA2 der der Einheit CPU2 zugeordnete Bus-Account gespeichert ist,
   - in der Speichereinrichtung CREDIT ein Wert gespeichert ist, um welchen die in den Speichereinrichtungen BA1 und/oder BA2 gespeicherten Bus-Accounts beim Vorliegen bestimmter Bedingungen (beim Auftreten bestimmter Zustände oder Ereignisse) verändert werden, und
   - in der Speichereinrichtung COST ein Wert gespeichert ist, um welchen die in den Speichereinrichtungen BA1 und/oder BA2 gespeicherten Bus-Accounts beim Vorliegen bestimmter anderer Bedingungen (beim Auftreten bestimmter anderer Zustände oder Ereignisse) verändert werden,
- und eine Busaccount-Steuereinrichtung BAC, durch welche die in den Speichereinrichtungen BA1 und BA2 gespeicherten Bus-Accounts beim Vorliegen der entsprechenden Bedingungen um den in der Speichereinrichtung CREDIT gespeicherten Wert oder um den in der Speichereinrichtung COST gespeicherten Wert verändert werden, oder auf einen bestimmten Wert gesetzt werden.

Die Speichereinrichtungen BA1 und BA2 werden bei der Inbetriebnahme des Bussystems und bei Bedarf auch in mehr oder weniger großen Abständen während des Betriebes auf bestimmte (Anfangs-)Werte gesetzt. Diese Anfangswerte können für die Speichereinrichtungen BA1 und BA2 unterschiedlich groß sein und können darüber hinaus auch verändert werden, wodurch die Speichereinrichtungen BA1 und BA2 unabhängig voneinander zu beliebigen Zeitpunkten auf beliebige Werte gesetzt werden können.

Das Setzen der Speichereinrichtungen BA1 und BA2 auf die jeweiligen Anfangswerte wird im betrachteten Beispiel durch eine oder mehrere der Einheiten, die Bus-Master werden können, also durch die Einheiten CPU1 und/oder CPU2, oder durch den Bus-Controller BUS CTRL veranlaßt.

Die Inhalte der Speichereinrichtungen CREDIT und COST können ebenfalls unabhängig voneinander festgelegt und variiert werden. Die Festlegung und/oder Veränderung dieser Werte erfolgt im betrachteten Beispiel ebenfalls durch eine oder mehrere der Einheiten, die Bus-Master werden können, also durch die Einheiten CPU1 und/oder CPU2, oder durch den Bus-Controller BUS CTRL.

Die Veränderung der in den Speichereinrichtungen BA1 und BA2 gespeicherten Werte um die in den Speichereinrichtungen CREDIT und COST gespeicherten Werte wird im betrachteten Beispiel durch den Bus-Controller BUS CTRL veranlaßt und durchgeführt.

Im betrachteten Beispiel wird so verfahren, daß die in den Speichereinrichtungen BA1 und BA2 gespeicherten Bus-Accounts in jedem Buszyklus um den in der Speichereinrichtung CREDIT gespeicherten Wert erhöht, oder um den in der Speichereinrichtung COST gespeicherten Wert verringert werden,
- wobei die Bus-Accounts, die den Einheiten zugeordnet sind, welchen im betreffenden Buszyklus der Bus nicht zugeteilt ist, erhöht werden, und
- wobei der Bus-Account, der der Einheit zugeordnet ist, welcher im betreffenden Buszyklus der Bus zugeteilt ist, verringert wird.

Wie eingangs bereits erwähnt wurde, arbeitet die Arbitrierungs-Logik AL abhängig von den in den Speichereinrichtungen BA1 und BA2 gespeicherten Bus-Accounts. Genauer gesagt bekommt eine die Zuteilung des Busses anfordernde Einheit den Bus nur zugeteilt, wenn der der betreffenden Einheit zugeordnete Bus-Account im Fall, daß der betreffenden Einheit der Bus zugeteilt wird, aufgrund der durch den Buszugriff bewirkten Verringerung des Bus-Account nicht so weit absinken würde, daß er einen bestimmten Grenzwert unterschreitet, wobei der besagte Grenzwert im betrachteten Beispiel der Wert 0 ist.

Durch eine derartige Buszuteilung kann festgelegt werden, wie oft die einzelnen Einheiten den Bus pro Zeiteinheit zugeteilt bekommen können, und/oder wie lange ein einzelner Buszugriff und/oder die Summe aller Buszugriffe innerhalb einer bestimmten Zeit sein darf. Dadurch kann die Buszuteilung mit geringem Aufwand optimal an die jeweiligen Verhältnisse, auch an sich während des Betriebes ändernde Verhältnisse angepaßt werden. Eine solche Buszuteilung ist insbesondere erheblich flexibler als eine Buszuteilung, die "nur" unter Berücksichtigung von Prioritäten erfolgt, die den Einheiten, welche den Bus anfordern können, zugeordnet sind. Anders als bei einer Busvergabe unter Berücksichtigung von den Einheiten zugeordneten Prioritäten entfaltet die beschriebene Buszuteilung nämlich nicht nur dann Wirkung, wenn gleichzeitig mehrere Busanforderungen vorliegen. Es wird auch schon dann die Buszuteilung verweigert, wenn die den Buszugriff anfordernde Einheit ihr Buszugriffs-Kontingent ausgeschöpft hat; dadurch kann sichergestellt werden, daß jede Einheit innerhalb eines bestimmten Zeitraumes eine bestimmte Anzahl von Malen oder für eine bestimmte Dauer den Bus zugeteilt bekommen kann.

Es dürfte einleuchten, daß das beschriebene Bussystem in vielfacher Hinsicht modifizierbar ist. Insbesondere kann vorgesehen werden,
- daß die Beträge, um welche die Bus-Accounts verändert werden, wenn die Einheiten, welchen die Bus-Accounts zugeordnet sind, in einem Buszyklus keinen Zugriff auf den Bus haben, für die verschiedenen Einheiten unterschiedlich groß sind (daß den Speichereinrichtungen BA1 und BA2 jeweils eigene Speichereinrichtungen CREDIT zugeordnet sind und diese unabhängig voneinander beschrieben und/oder geändert werden können),
- daß die Beträge, um welche die Bus-Accounts verändert werden, wenn die Einheiten, welchen die Bus-Accounts zugeordnet sind, in einem Buszyklus einen Zugriff auf den Bus haben, für die verschiedenen Einheiten unterschiedlich groß sind (daß den Speichereinrichtungen BA1 und BA2 jeweils eigene Speichereinrichtungen COST zugeordnet sind und diese unabhängig voneinander beschrieben und/oder geändert werden können),
- daß die Bus-Accounts erhöht werden, wenn die Einheiten, welchen die Bus-Accounts zugeordnet sind, in einem Buszyklus einen Zugriff auf den Bus haben, und verringert werden, wenn die Einheiten, welchen die Bus-Accounts zugeordnet sind, in einem Buszyklus keinen Zugriff auf den Bus haben,
- daß die Bus-Accounts nur verändert werden, wenn die Einheiten, welchen die Bus-Accounts zugeordnet sind, in einem Buszyklus einen Zugriff auf den Bus haben, oder nur verändert werden, wenn die Einheiten, welchen die Bus-Accounts zugeordnet sind, in einem Buszyklus keinen Zugriff auf den Bus haben,
- daß eine die Zuteilung des Busses anfordernde Einheit den Bus nur zugeteilt bekommt, wenn der der betreffenden Einheit zugeordnete Bus-Account im Fall daß der betreffenden Einheit der Bus zugeteilt wird, aufgrund einer durch den Buszugriff bewirkten Erhöhung nicht so weit ansteigen würde, daß er einen bestimmten Grenzwert überschreitet,
- daß eine Einheit, die den Bus anfordert, den Bus zugeteilt bekommt, wenn der ihr zugeordnete Bus-Account einen bestimmten Grenzwert nicht überschreitet, oder wenn der ihr zugeordnete Bus-Account einen bestimmten Grenzwert nicht überschreitet, wobei der Grenzwert beispielsweise der Wert ist, um welchen der Bus-Account aufgrund der Zuteilung des Busses verändert werden würde,
- daß der Grenzwert ein anderer Wert als 0 ist,
- daß die Zuteilung des Busses an eine die Zuteilung des Busses anfordernde Einheit vom Größenverhältnis ausgewählter oder aller Bus-Accounts abhängig gemacht wird,
- daß anstelle der Veränderung der Bus-Accounts oder zusätzlich zur Veränderung der Bus-Accounts die Bedingungen verändert werden, die die Bus-Accounts erfüllen müssen, damit einer den Bus anfordernden Einheit der Bus zugeteilt wird,
- daß die Bedingungen, die die Bus-Accounts erfüllen müssen, damit einer den Bus anfordernden Einheit der Bus zugeteilt wird, für die verschiedenen Einheiten, die den Bus anfordern können, unterschiedlich sind,
- daß die Buszuteilung nur dann abhängig von den Bus-Accounts festgelegt wird, wenn mehrere Einheiten den Bus gleichzeitig anfordern,
- daß die Werte, um welche die Bus-Accounts jeweils verändert werden, davon abhängig gemacht werden, ob und gegebenenfalls welche weiteren Einheiten den Bus gleichzeitig angefordert haben,
- daß die Werte, um welche die Bus-Accounts jeweils verändert werden, davon abhängig von den Bus-Accounts der Einheiten abhängig gemacht werden, die den Bus gleichzeitig angefordert haben, und/oder
- daß die Zuteilung des Busses unter zusätzlicher Berücksichtigung von Prioritäten erfolgt, die den Einheiten, die den Bus anfordern können, zugeordnet sind.

Es sind auch Modifikationen in dem in der Figur 2 gezeigten Aufbau des Bus-Controllers möglich.

Insbesondere besteht keine Notwendigkeit, daß jeder Einheit, die Bus-Master werden kann, ein eigener Bus-Account zugeordnet wird.

Es kann auch vorgesehen werden, daß zwei oder mehreren Bus-Mastern nur ein einziger, gemeinsamer Bus-Account zugeordnet wird, und daß es vom Wert dieses einzigen Bus-Account abhängt, ob und gegebenenfalls welche Einheit den Bus zugeteilt bekommt.

Insbesondere wenn ein Bus-Account "nur" zwei Einheiten zugeordnet ist, kann Bus-Account beispielsweise so verwaltet werden, daß er erhöht wird, wenn der Bus der einen Einheit zugeteilt wird, und erniedrigt wird, wenn der Bus der anderen Einheit zugeteilt wird, und daß es vom Vorzeichen des Bus-Account abhängig gemacht wird, ob und gegebenenfalls welcher Einheit der Bus zugeteilt wird.

Der gemeinsame Bus-Account könnte auch so verwaltet werden, daß nicht unterschieden wird, welcher Bus-Master den Bus zugeteilt bekommt, also daß der Bus-Account beispielsweise verringert wird, wenn einer der Einheiten, welchen der gemeinsame Bus-Account zugeordnet ist, den Bus zugeteilt bekommt, und erhöht wird, wenn keiner der Einheiten, welchen der gemeinsame Bus-Account zugeordnet ist, den Bus zugeteilt bekommt. Dadurch werden die Einheiten, welchen der gemeinsame Bus-Account zugeordnet ist, als eine Bus-Master-Gruppe behandelt, und es wird abhängig vom Wert des Bus-Accounts entschieden, ob dieser Gruppe der Bus zugeteilt werden kann oder muß.

Es ist auch möglich, einem Mischbetrieb vorzusehen, wobei einem oder mehreren Einheiten ein Bus-Account zugeordnet ist, und einem oder mehreren anderen Einheiten kein Bus-Account zugeordnet ist. Dabei existieren mehrere Möglichkeiten, unter welchen Bedingungen den Einheiten ohne Bus-Account der Bus zugeteilt wird: sie können höher priorisiert sein, so daß ihnen der Bus auf eine entsprechende Anforderung hin immer zugeteilt wird, oder sie können niedriger priorisiert sein, so daß ihnen der Bus im Falle von mehreren gleichzeitigen Bus-Anforderungen nie zugeteilt wird, oder es kann von den Werte der Bus-Accounts der anderen Bus-Master abhängig gemacht werden, ob ihnen der Bus zugeteilt wird.

Daß die Busvergabe unter alleiniger oder zusätzlicher Berücksichtigung der Werte der Bus-Accounts aller oder bestimmter anderer Einheiten erfolgt, kann übrigens auch bei den Bus anfordernden Einheiten praktiziert werden, welchen ein Bus-Account zugeordnet ist.

Durch das beschriebene Bussystem kann unabhängig von den Einzelheiten der praktischen Realisierung gewährleistet werden, daß eine Einheit, die Daten auszugeben hat oder Daten von einer anderen Einheit benötigt, innerhalb einer gewissen maximalen Zeit einen Zugriff auf den Bus erhalten kann.

### Bezugszeichenliste

- AL: Arbitrierungslogik
- BA1: Speichereinrichtung zur Speicherung des Bus-Account für CPU1
- BA2: Speichereinrichtung zur Speicherung des Bus-Account für CPU2
- BAC: Bus-Account-Steuereinrichtung
- BUS: Bus
- BUS CTRL: Bus-Controller
- COST: Speichereinrichtung zur Speicherung eines Wertes, um welchen die Inhalte von BA1 und BA2 beim Vorliegen bestimmter Bedingungen verändert werden,
- CPUx: Cores eine Mikrocontrollers
- CREDIT: Speichereinrichtung zur Speicherung eines Wertes, um welchen die Inhalte von BA1 und BA2 beim Vorliegen bestimmter Bedingungen verändert werden,
- GRANTx: Leitungen, über welche CPUx BUS zugeteilt bekommen
- RAM: Speicher
- REQUESTx: Leitungen, über welche CPUx Buszugriffe anfordern

## Patentansprüche

1. Bussystem mit
- einem Bus (BUS),
- mehreren über den Bus miteinander verbindbaren Einheiten (CPU1, CPU2, RAM), und
- einem Bus-Controller (BUS CTRL),
- wobei die Einheiten dann, wenn sie eine Verbindung zu einer oder mehreren anderen Einheiten benötigen, beim Bus-Controller einen Buszugriff anfordern, und wobei der Bus-Controller entscheidet, welcher Einheit der Bus zugeteilt wird,
- wobei den Einheiten, die einen Buszugriff anfordern können, zumindest teilweise Werte zugeordnet sind, welche anzeigen, wie lange und/oder wie häufig die betreffende Einheit den Bus zugeteilt bekommen kann oder zugeteilt bekommen hat, und
- wobei es von diesen Werten abhängig gemacht wird, ob eine einen Buszugriff anfordernde Einheit den Bus zugeteilt bekommt, oder ob eine einen Buszugriff benötigende Einheit den Bus überhaupt anfordert,
**dadurch gekennzeichnet,**
**dass** der Betrag, um welchen der einer Einheit zugeordnete Wert verändert wird, davon abhängt, welche anderen Einheiten gleichzeitig den Bus angefordert haben, oder welche Werte diesen Einheiten zugeordnet sind.

2. Bussystem nach Anspruch 1,
**dadurch gekennzeichnet,**
**dass** die Werte während des Betriebes des Bussystems veränderbar sind.

3. Bussystem nach Anspruch 2,
**dadurch gekennzeichnet,**
**dass** die Werte beim Vorliegen bestimmter Bedingungen um einen bestimmten Betrag erhöht werden, oder um einen bestimmten Betrag verringert werden, oder auf einen Anfangswert gesetzt werden.

4. Bussystem nach Anspruch 2 oder 3,
**dadurch gekennzeichnet,**
**dass** die verschiedenen Einheiten (CPU1, CPU2) zugeordneten Werte unabhängig voneinander veränderbar sind.

5. Bussystem nach Anspruch 3 oder 4,
**dadurch gekennzeichnet,**
**dass** die Anfangswerte für die verschiedenen Einheiten (CPU1, CPU2) unterschiedlich hoch sein können und während des Betriebes des Bussystems verändert werden können.

6. Bussystem nach einem der Ansprüche 3 bis 5,
**dadurch gekennzeichnet,**
**dass** der Betrag, um welchen ein Wert beim Vorliegen einer bestimmten Bedingung erhöht wird, und der Betrag, um welchen dieser Wert beim Vorliegen einer bestimmten Bedingung verringert wird, unterschiedlich groß sein können.

7. Bussystem nach einem der Ansprüche 3 bis 6,
**dadurch gekennzeichnet,**
**dass** die Beträge, um welche die Werte beim Vorliegen einer bestimmten Bedingung erhöht werden, für die Einheiten (CPU1, CPU2), welchen ein solcher Wert zugeordnet ist, unterschiedlich groß sein können.

8. Bussystem nach einem der Ansprüche 3 bis 7,
**dadurch gekennzeichnet,**
**dass** die Beträge, um welche die Werte beim Vorliegen einer bestimmten Bedingung verringert werden, für die Einheiten (CPU1, CPU2), welchen ein solcher Wert zugeordnet ist, unterschiedlich groß sein können.

9. Bussystem nach einem der Ansprüche 3 bis 8,
**dadurch gekennzeichnet,**
**dass** die Beträge, um welche die Werte beim Vorliegen einer bestimmten Bedingung erhöht oder verringert werden, während des Betriebes des Bussystems verändert werden können.

10. Bussystem nach einem der Ansprüche 3 bis 9,
**dadurch gekennzeichnet,**
**dass** ein Wert, der einer Einheit (CPU1, CPU2) zugeordnet ist, die gerade keinen Buszugriff durchführt, um den bestimmten Betrag erhöht wird.

11. Bussystem nach einem der Ansprüche 3 bis 10,
**dadurch gekennzeichnet,**
**dass** ein Wert, der einer Einheit (CPU1, CPU2) zugeordnet ist, die gerade einen Buszugriff durchführt, um den bestimmten Betrag verringert wird.

12. Bussystem nach einem der Ansprüche 3 bis 9,
**dadurch gekennzeichnet,**
**dass** ein Wert, der einer Einheit (CPU1, CPU2) zugeordnet ist, die gerade keinen Buszugriff durchführt, um den bestimmten Betrag verringert wird.

13. Bussystem nach einem der Ansprüche 3 bis 9, oder 12,
**dadurch gekennzeichnet,**
**dass** ein Wert, der einer Einheit (CPU1, CPU2) zugeordnet ist, die gerade einen Buszugriff durchführt, um den bestimmten Betrag erhöht wird.

14. Bussystem nach einem der Ansprüche 9 bis 13,
**dadurch gekennzeichnet,**
**dass** in jedem Buszyklus eine Veränderung der Werte erfolgt.

15. Bussystem nach einem der vorhergehenden Ansprüche,
**dadurch gekennzeichnet,**
**dass** eine Einheit (CPU1, CPU2), die den Bus (BUS) anfordert, den Bus nur zugeteilt bekommt, oder wenn der ihr zugeordnete Wert einen bestimmten Grenzwert nicht überschreitet.

16. Bussystem nach einem der Ansprüche 1 bis 14,
**dadurch gekennzeichnet,**
**dass** eine Einheit (CPU1, CPU2), die den Bus (BUS) anfordert, den Bus nur zugeteilt bekommt, wenn der ihr zugeordnete Wert einen bestimmten Grenzwert nicht unterschreitet, oder wenn der ihr zugeordnete Wert einen bestimmten Grenzwert nicht unterschreitet.

17. Bussystem nach einem der Ansprüche 3 bis 16,
**dadurch gekennzeichnet,**
**dass** eine Einheit (CPU1, CPU2), die den Bus (BUS) anfordert, den Bus nur zugeteilt bekommt, wenn der ihr zugeordnete Wert im Fall, dass der betreffenden Einheit der Bus zugeteilt wird, aufgrund der durch den Buszugriff bewirkten Verringerung nicht so weit absinken würde, dass er einen bestimmten Grenzwert unterschreitet, bzw. aufgrund der durch den Buszugriff bewirkten Erhöhung nicht so weit ansteigen würde, dass er einen bestimmten Grenzwert überschreitet.

18. Bussystem nach einem der Ansprüche 15 bis 17,
**dadurch gekennzeichnet,**
**dass** der Grenzwert 0 ist.

19. Bussystem nach einem der vorhergehenden Ansprüche,
**dadurch gekennzeichnet,**
**dass** die den Einheiten (CPU1, CPU2) zugeordneten Werte im Bus-Controller (BUS CTRL) gespeichert sind und verwaltet werden.

20. Bussystem nach einem der vorhergehenden Ansprüche,
**dadurch gekennzeichnet,**
**dass** die den Einheiten (CPU1, CPU2) zugeordneten Werte in den Einheiten, welchen sie zugeordnet sind, gespeichert sind und verwaltet werden.

21. Bussystem nach einem der vorhergehenden Ansprüche,
**dadurch gekennzeichnet,**
**dass** die Buszuteilung vom Größenverhältnis ausgewählter oder aller Werte von den den Einheiten (CPU1, CPU2) zugeordneten Werten abhängig gemacht wird.

22. Bussystem nach einem der vorhergehenden Ansprüche,,
**dadurch gekennzeichnet,**
**dass** die Bedingungen, die die den Einheiten (CPU1, CPU2) zugeordneten Werte erfüllen müssen, damit einer der Bus (BUS) anfordernden Einheit der Bus zugeteilt wird, veränderbar sind.

23. Bussystem nach einem der vorhergehenden Ansprüche,
**dadurch gekennzeichnet,**
**dass** die Bedingungen, die die den Einheiten (CPU1, CPU2) zugeordneten Werte erfüllen müssen, damit einer den Bus (BUS) anfordernden Einheit der Bus zugeteilt wird, für verschiedene Einheiten unterschiedlich sind.

24. Bussystem nach einem der vorhergehenden Ansprüche,
**dadurch gekennzeichnet,**
**dass** der Bus-Controller die den Einheiten (CPU1, CPU2) zugeordneten Werte aller einen Buszugriff anfordernden Einheiten (CPU1, CPU2) gegeneinander bewertet und daraus resultierend den Buszugriff an eine der Einheiten freigibt.

25. Bussystem nach einem der vorhergehenden Ansprüche,
**dadurch gekennzeichnet,**
**dass** nur ausgewählten Einheiten ein Wert zugeordnet ist, und die Busvergabe an die restlichen Einheiten von den zugeordneten Werten der ausgewählten Einheiten abhängt.

26. Bussystem nach einem der Ansprüche 1 bis 24,
**dadurch gekennzeichnet,**
**dass** nur ausgewählten Einheiten ein Wert zugeordnet ist, und die Busvergabe unter Berücksichtigung von Prioritäten erfolgt, die den restlichen Einheiten zugeordnet ist.

## Claims

1. Bus system having
- a bus (BUS),
- a plurality of units (CPU1, CPU2, RAM) which can be connected to one another via the bus, and
- a bus controller (BUS CTRL),
- wherein the units, when requiring a connection to one or more other units, request bus access from the bus controller, and wherein the bus controller decides which unit is assigned the bus,
- wherein at least some of the units which are able to request bus access have associated values which indicate for how long and/or how frequently the relevant unit can be assigned or has been assigned the bus, and
- wherein these values are used to govern whether a unit requesting bus access is assigned the bus or whether a unit requiring bus access actually requests the bus, **characterized**
**in that** the absolute value by which the value associated with a unit is altered is dependent on which other units have simultaneously requested the bus or which values are associated with these units.

2. Bus system according to Claim 1,
**characterized**
**in that** the values can be altered during the operation of the bus system.

3. Bus system according to Claim 2,
**characterized**
**in that** the values are increased by a particular absolute value, or are decreased by a particular absolute value, or are set to an initial value, when particular conditions are present.

4. Bus system according to Claim 2 or 3,
**characterized**
**in that** the values associated with different units (CPU1, CPU2) can be altered independently of one another.

5. Bus system according to Claim 3 or 4,
**characterized**
**in that** the initial values for the different units (CPU1, CPU2) may be at different levels and can be altered during the operation of the bus system.

6. Bus system according to one of Claims 3 to 5,
**characterized**
**in that** the absolute value by which a value is increased when a particular condition is present and the absolute value by which this value is decreased when a particular condition is present may be of different magnitude.

7. Bus system according to one of Claims 3 to 6,
**characterized**
**in that** the absolute values by which the values are increased when a particular condition is present may be of different magnitude for the units (CPU1, CPU2) with which such a value is associated.

8. Bus system according to one of Claims 3 to 7,
**characterized**
**in that** the absolute values by which the values are decreased when a particular condition is present may be of different magnitude for the units (CPU1, CPU2) with which such a value is associated.

9. Bus system according to one of Claims 3 to 8,
**characterized**
**in that** the absolute values by which the values are increased or decreased when a particular condition is present can be altered during the operation of the bus system.

10. Bus system according to one of Claims 3 to 9,
**characterized**
**in that** a value which is associated with a unit (CPU1, CPU2) which is currently performing no bus access is increased by the particular absolute value.

11. Bus system according to one of Claims 3 to 10,
**characterized**
**in that** a value which is associated with a unit (CPU1, CPU2) which is currently performing bus access is decreased by the particular absolute value.

12. Bus system according to one of Claims 3 to 9,
**characterized**
**in that** a value which is associated with a unit (CPU1, CPU2) which is currently performing no bus access is decreased by the particular absolute value.

13. Bus system according to one of Claims 3 to 9, or 12,
**characterized**
**in that** a value which is associated with a unit (CPU1, CPU2) which is currently performing bus access is increased by the particular absolute value.

14. Bus system according to one of Claims 9 to 13,
**characterized**
**in that** the values are altered in each bus cycle.

15. Bus system according to one of the preceding claims,
**characterized**
**in that** a unit (CPU1, CPU2) which requests the bus (BUS) is assigned the bus only if the value associated with said unit is not above a particular limit value.

16. Bus system according to one of Claims 1 to 14,
**characterized**
**in that** a unit (CPU1, CPU2) which requests the bus (BUS) is assigned the bus only if the value associated with said unit is not below a particular limit value, or if the value associated with said unit is not below a particular limit value.

17. Bus system according to one of Claims 3 to 16,
**characterized**
**in that** a unit (CPU1, CPU2) which requests the bus (BUS) is assigned the bus only if the value associated with said unit - in the event of the relevant unit being assigned the bus - were not to fall, on account of the decrease prompted by the bus access, to such an extent that it is below a particular limit value, or were not to rise, on account of the increase prompted by the bus access, to such an extent that it is above a particular limit value.

18. Bus system according to one of Claims 15 to 17,
**characterized**
**in that** the limit value is 0.

19. Bus system according to one of the preceding claims,
**characterized**
**in that** the values associated with the units (CPU1, CPU2) are stored and managed in the bus controller (BUS CTRL).

20. Bus system according to one of the preceding claims,
**characterized**
**in that** the values associated with the units (CPU1, CPU2) are stored and managed in the units with which they are associated.

21. Bus system according to one of the preceding claims,
**characterized**
**in that** the bus assignment is made dependent on the ratio of magnitudes of selected or all values of the values associated with the units (CPU1, CPU2).

22. Bus system according to one of the preceding claims,
**characterized**
**in that** the conditions which have to be met by the values associated with the units (CPU1, CPU2) so that a unit requesting the bus (BUS) is assigned the bus can be altered.

23. Bus system according to one of the preceding claims,
**characterized**
**in that** the conditions which have to be met by the values associated with the units (CPU1, CPU2) so that the unit requesting the bus (BUS) is assigned the bus are different for different units.

24. Bus system according to one of the preceding claims,
**characterized**
**in that** the bus controller rates the values associated with the units (CPU1, CPU2) from all units (CPU1, CPU2) requesting bus access against one another and as a result clears one of the units to access the bus.

25. Bus system according to one of the preceding claims,
**characterized**
**in that** only selected units have an associated value, and the bus allocation to the remainder of the units is dependent on the associated values of the selected units.

26. Bus system according to one of Claims 1 to 24,
**characterized**
**in that** only selected units have an associated value, and the bus allocation is effected by taking account of priorities which are associated with the remainder of the units.

## Revendications

1. Système de bus comportant :
- un bus (BUS),
- une pluralité d'unités (CPU1, CPU2, RAM) pouvant être connectées les unes aux autres par l'intermédiaire du bus, et
- un contrôleur de bus (BUS CTRL),
- dans lequel les unités ne demandent au contrôleur de bus un accès au bus que lorsqu'il est nécessaire qu'elles se connectent à une ou plusieurs autres unités, et le contrôleur de bus choisit l'unité à laquelle sera alloué le bus,
- dans lequel des valeurs sont au moins partiellement associées aux unités qui peuvent demander un accès au bus, lesquelles valeurs indiquent pendant combien de temps et/ou avec quelle fréquence le bus peut être alloué ou a été alloué à l'unité concernée, et
- dans lequel il est fait en sorte que le fait de savoir si le bus est alloué à une unité demandant un accès au bus ou si une unité nécessitant un accès au bus demande le bus en priorité dépende de ces valeurs,
**caractérisé en ce que** la quantité dont est modifiée la valeur associée à ladite unité dépend des unités ayant simultanément demandé un accès au bus ou des valeurs qui sont associées à ces unités.

2. Système de bus selon la revendication 1, **caractérisé en ce que** les valeurs peuvent être modifiées pendant le fonctionnement du système de bus.

3. Système de bus selon la revendication 2, **caractérisé en ce qu'**en présence de conditions déterminées, les valeurs sont augmentées d'une quantité déterminée ou sont réduites d'une quantité déterminée ou sont réglées à une valeur initiale.

4. Système de bus selon la revendication 2 ou 3, **caractérisé en ce que** les valeurs associées à différentes unités (CPU1, CPU2) peuvent être modifiées indépendamment les unes des autres.

5. Système de bus selon la revendication 3 ou 4, **caractérisé en ce que** les valeurs initiales peuvent s'élever à des valeurs différentes pour les différentes unités (CPU1, CPU2) et peuvent être modifiées pendant le fonctionnement du système de bus.

6. Système de bus selon l'une quelconque des revendications 3 à 5, **caractérisé en ce que** la quantité dont est augmentée une valeur en présence d'une condition déterminée, et la quantité dont est réduite cette valeur en présence d'une condition déterminée, peuvent être différentes l'une de l'autre.

7. Système de bus selon l'une quelconque des revendications 3 à 6, **caractérisé en ce que** les quantités dont sont augmentées les valeurs en présence d'une condition déterminée peuvent être différentes les unes des autres pour les unités (CPU1, CPU2) auxquelles est associée une telle valeur.

8. Système de bus selon l'une quelconque des revendications 3 à 7, **caractérisé en ce que** les quantités dont sont réduites les valeurs en présence d'une condition déterminée peuvent être différentes les unes des autres pour les unités (CPU1, CPU2) auxquelles est associée une telle valeur.

9. Système de bus selon l'une quelconque des revendications 3 à 8, **caractérisé en ce que** les quantités dont sont augmentées ou réduites les valeurs en présence d'une condition déterminée peuvent être modifiées pendant le fonctionnement du système de bus.

10. Système de bus selon l'une quelconque des revendications 3 à 9, **caractérisé en ce qu'**une valeur associée à une unité (CPU1, CPU2) qui n'effectue aucun accès au bus est augmentée d'une quantité déterminée.

11. Système de bus selon l'une quelconque des revendications 3 à 10, **caractérisé en ce qu'**une valeur associée à une unité (CPU1, CPU2) qui effectue un accès au bus est réduite d'une quantité déterminée.

12. Système de bus selon l'une quelconque des revendications 3 à 9, **caractérisé en ce qu'**une valeur associée à une unité (CPU1, CPU2) qui n'effectue aucun accès au bus est réduite d'une quantité déterminée.

13. Système de bus selon l'une quelconque des revendications 3 à 9 ou 12, **caractérisé en ce qu'**une valeur associée à une unité (CPU1, CPU2) qui effectue un accès au bus est augmentée d'une quantité déterminée.

14. Système de bus selon l'une quelconque des revendications 9 à 13, **caractérisé en ce qu'**une modification des valeurs se produit lors de chaque cycle du bus.

15. Système de bus selon l'une quelconque des revendications précédentes, **caractérisé en ce que** le bus n'est alloué à une unité (CPU1, CPU2) demandant le bus (BUS) que lorsque la valeur qui lui est associée ne s'élève pas au-dessus d'une valeur limite déterminée.

16. Système de bus selon l'une quelconque des revendications 1 à 14, **caractérisé en ce que** le bus n'est alloué à une unité (CPU1, CPU2) demandant le bus (BUS) que lorsque la valeur qui lui est associée ne s'abaisse pas en dessous d'une valeur limite déterminée ou si la valeur qui lui est associée ne s'abaisse pas en dessous d'une valeur limite déterminée.

17. Système de bus selon l'une quelconque des revendications 3 à 16, **caractérisé en ce que** le bus n'est alloué à une unité (CPU1, CPU2) qui demande le bus (BUS) que lorsque la valeur qui lui est associée, dans le cas où le bus a été alloué à l'unité concernée, ne s'abaisse pas en raison de la réduction provoquée par l'accès au bus à un point tel qu'elle s'abaisse en dessous d'une valeur limite déterminée, ou ne s'élève pas en raison de l'augmentation provoquée par l'accès au bus à un point tel qu'elle s'élève au-dessus d'une valeur limite déterminée.

18. Système de bus selon l'une quelconque des revendications 15 à 17, **caractérisé en ce que** la valeur limite est égale à 0.

19. Système de bus selon l'une quelconque des revendications précédentes, **caractérisé en ce que** les valeurs associées aux unités (CPU1, CPU2) sont stockées et gérées dans le contrôleur de bus (BUS CTRL).

20. Système de bus selon l'une quelconque des revendications précédentes, **caractérisé en ce que** les valeurs associées aux unités (CPU1, CPU2) sont stockées et gérées dans les unités auxquelles elles sont associées.

21. Système de bus selon l'une quelconque des revendications précédentes, **caractérisé en ce que** l'allocation du bus est amenée à dépendre du rapport entre des valeurs sélectionnées ou la totalité des valeurs associées aux unités (CPU1, CPU2).

22. Système de bus selon l'une quelconque des revendications précédentes, **caractérisé en ce que** les conditions que doivent satisfaire les valeurs associées aux unités (CPU1, CPU2) et conformément auxquelles le bus est alloué à une unité demandant le bus (BUS) peuvent être modifiées.

23. Système de bus selon l'une quelconque des revendications précédentes, **caractérisé en ce que** les conditions que doivent satisfaire les valeurs associées aux unités (CPU1, CPU2) et conformément auxquelles le bus est alloué à une unité demandant le bus (BUS) sont différentes pour des unités différentes.

24. Système de bus selon l'une quelconque des revendications précédentes, **caractérisé en ce que** le contrôleur de bus évalue les unes par rapport aux autres les valeurs associées aux unités (CPU1, CPU2) pour toutes les unités (CPU1, CPU2) demandant un accès au bus et par suite, libère l'accès au bus sur l'une des unités.

25. Système de bus selon l'une quelconque des revendications précédentes, **caractérisé en ce qu'**une valeur n'est associée qu'à des unités sélectionnées et **en ce que** l'attribution du bus aux unités restantes dépend des valeurs associées des unités sélectionnées.

26. Système de bus selon l'une quelconque des revendications 1 à 24, **caractérisé en ce qu'**une valeur n'est associée qu'à des unités sélectionnées et **en ce que** l'attribution du bus s'effectue en tenant compte de priorités qui sont associées aux unités restantes.
